# EUROPEAN PATENT APPLICATION

(11) **EP 3 272 889 A1**
(43) Date of publication of application: **24.01.2018**
(21) Application number: 16764688.4
(22) Date of filing: 01.03.2016
(51) Int. Cl.: C22C 14/00, H01M 8/0202, C22F 1/00, C22F 1/18, H01M 8/10

(54) **TITANIUM ALLOY, SEPARATOR, AND SOLID POLYMER FUEL CELL**

(30) Priority: 18.03.2015 JP 2015055451
(71) Applicant: Nippon Steel & Sumitomo Metal Corporation, Tokyo 100-8071 (JP)
(72) Inventor: KAMINAKA, Hideya, Tokyo 100-8071 (JP); UMEDA, Shigeru, Tokyo 100-8071 (JP); TAKASHIMA, Yuya, Tokyo 100-8071 (JP)
(74) Representative: J A Kemp
(86) International application number: PCT/JP2016/056308
(87) International publication number: WO 2016/147858

(57) **Abstract**

A titanium alloy contains 0.01 to 0.15% by mass of at least one of platinum group elements in total, and the balance being titanium, oxygen, and impurities, wherein, the titanium alloy includes particles of a compound that is made up of at least one of the platinum group elements, titanium, and oxygen, an average size of the particles on a surface of the titanium alloy is 1 µm or smaller, and a number density of the particles on the surface of the titanium alloy is 25/1000 µm² or more. This titanium alloy has a high corrosion resistance and capable of keeping a low contact resistance in comparison with conventional titanium alloys having an equivalent platinum group element content.

## Description

### TECHNICAL FIELD

The present invention relates to a titanium alloy, a separator for fuel cell made of the titanium alloy, and a polymer electrolyte fuel cell including the separator.

### BACKGROUND ART

Having an excellent corrosion resistance, titanium is used in a wide range of applications such as materials for chemical industry equipment, thermal/nuclear power generation equipment, and desalination equipment. However, the environment where titanium can exert its high corrosion resistance is limited to only oxidizing acid (e.g., nitric acid) environments, neutral chloride environments such as seawater, or the like, and titanium has an insufficient crevice corrosion resistance under high-temperature chloride environments, and an insufficient corrosion resistance in non-oxidizing acid solutions such as hydrochloric acid (hereinafter, will be also simply referred to as "corrosion resistance").

To solve this problem, there have been proposed titanium alloys that include a platinum group element contained in titanium, and many kinds of titanium alloys such as Gr. 7 and Gr. 17 of the ASTM standards have been standardized and used in various applications. It is assumed hereinafter that Gr. (grade) is compliant with the ASTM standards.

Specifically, such titanium alloys are used in an anode electrode used for electrolysis in the soda products industry, for example, in regions of the electrode where crevice corrosion causes a problem. An anode electrode for the soda products industry is exposed to an environment in 20 to 30% salt water at a temperature of 100°C or higher, and thus is required to have an extremely high corrosion resistance.

Besides this usage, the titanium alloys described above are used in the following fields or applications.
(a) Reaction chambers and pipes in the field of Ni or Pb smelting industry. The reaction chambers and pipes are exposed to high-temperature, high-concentration sulfuric acid solution containing slurry, at a temperature higher than 100°C.
(b) The field of heat exchangers. For example, heat-transfer pipes that are exposed to high-temperature, high-concentration salt water in a heat exchanger used in the salt manufacture field, heat-transfer pipes used for heat exchange of exhaust gas that is from an incinerator and contains chlorine, NOₓ, or SOₓ, and the like.
(c) The field of petrochemical industry. A reaction chamber of desulfurization equipment in oil refining, which is exposed to crude oil at a high temperature of higher than 100°C, hydrogen sulfide, ammonium chloride, and the like.

Ti-0.15 Pd alloy (Gr.7) has been developed to improve the corrosion resistance in the aforementioned application. This titanium alloy makes use of a phenomenon in which Pd contained in the alloy reduces a hydrogen overvoltage, whereby a rest potential is kept within a passive region. Specifically, Pd dissolved from this alloy due to corrosion is precipitated again and accumulated on the surface of the alloy, which reduces the hydrogen overvoltage of this alloy, whereby the rest potential is kept within a passive region, results in an excellent corrosion resistance.

Patent Document 1 discloses a titanium alloy in which the content of Pd, which is expensive, is reduced with respect to Gr.7, so that economic efficiency is enhanced. The content of Pd of this titanium alloy (Gr.17) is 0.03 to 0.1% by mass, which is a reduced content in comparison with Gr.7, but nonetheless, Gr.17 has an excellent crevice corrosion resistance.

Patent Document 2 discloses a titanium alloy that contains 0.01 to 0.12% by mass of one or more of platinum group elements in total and contains 5% by mass or less of one or more of Al, Cr, Zr, Nb, Si, Sn, and Mn in total, as a titanium alloy that inhibits reduction in corrosion resistance and at the same time allows its production at low cost.

In the applications described above, titanium alloys have sufficient corrosion resistances with the content of Pd within a range of 0.01 to 0.12% by mass. However, the properties of the titanium alloys such as corrosion resistance become insufficient to meet a demand for further enhanced properties in recent years, in the case where, in particular, the content of Pd is less than 0.05% by mass.

Non-Patent Document 1 describes that a content of Pd of 0.05% by mass or more is necessary to obtain a crevice corrosion resistance of Ti-Pd alloy, and that the addition of Co, Ni, or V as the third element improves the crevice corrosion resistance.

As seen from the above, the conventional techniques become insufficient to meet the demand for further enhanced corrosion resistance in the case where the content of Pd is less than 0.05% by mass. In addition, even a Ti-Pd alloy having a content of Pd of 0.05% by mass or more involves a problem in that, in some usage environments, the occurrence of damage such as a flow to its surface is likely to cause the advance of corrosion from this damage that serves as a starting point.

In recent years, attempts have been made on the application of titanium, which is excellent in corrosion resistance as described above, to separators for fuel cells. Fuel cells use the energy generated in the binding reaction between hydrogen and oxygen to generate electric power. For this reason, fuel cells are expected to be introduced and popularized in terms of both energy saving and environmental friendliness, as the next generation of electric power generation systems.

The types of the fuel cells are solid electrolyte, molten carbonate, phosphoric acid, polymer electrolyte, and other types. Of these types, polymer electrolyte fuel cells have high power density and can be downsized. In addition, the polymer electrolyte fuel cells operate at temperatures lower than those at which other types of fuel cells operate, and are easy to start up and stop. For this reason, the polymer electrolyte fuel cells are expected to be used for electric vehicles and small-sized cogeneration for home use and have particularly received attention in recent years.

The main functions required for separators of polymer electrolyte fuel cells are as follows.
(1) The function as a "channel" for uniformly supplying a fuel gas or an oxidative gas to the inside of a cell surface
(2) The function as a "channel" for efficiently discharging water generated on the cathode side from the fuel cell out of the system, together with carrier gases such as air after the reaction, and oxygen
(3) The function of serving as a path of electricity by being in contact with an electrode film, and further serving as an electrical "connector" between two adjacent single cells
(4) The function as a "partition wall" between adjacent cells, between an anode chamber of one cell and a cathode chamber of the adjacent cell
(5) In a water-cooled fuel cell, the function as a "partition wall" between a cooling water channel and an adjacent cell

The substrate materials of a separator used for a polymer electrolyte fuel cell (hereinafter, simply referred to as a "separator") is roughly categorized into metal-based materials and carbon-based materials. The metal-based materials including titanium are excellent in workability, which is a metal-specific nature, and have an advantage of reducing the weight of a separator by reducing the thickness of the separator, and other advantages.

In a fuel cell, a separator needs to be in contact with and at the same time electrically connected with a gas diffusion layer that functions as an anode or a cathode. However, a separator using a metal-based material (hereinafter, will be simply referred to as a "metallic separator") has the risk that its surface is oxidized, with the result that its contact resistance with the gas diffusion layer increases.

In contrast, the carbon-based materials have an advantage of obtaining lightweight separators by virtue of their small specific gravity, while remaining a problem of having gas permeability and a problem of having low mechanical strengths.

As for metallic separators, in particular separators made of a titanium-based material, various measures to suppress an increase in contact resistance have been proposed, examples of which include such as those described in Patent Documents 3 and 4.

Patent Document 3 proposes a titanium product for separators that is obtained by performing pickling in such a manner as to immerse a titanium alloy substrate containing a platinum group element in a solution containing a non-oxidizing acid and an oxidizing acid, so that a platinum group element is concentrated on the surface of the titanium alloy substrate, and thereafter performing heat treatment in a low-oxygen-concentration atmosphere. By performing these treatments, a mixed layer of the platinum group element and a titanium oxide is formed on the surface of this titanium product for separators. Patent Document 3 describes that the resultant titanium product shows a contact resistance of 10 mΩ·cm² or less with a current of 7.4 mA flowing therethrough and a load of 5 kgf/cm² (4.9 × 10⁵ Pa) applied thereto, and that the titanium product is thus excellent in conductivity. A titanium product similar to that of Patent Document 3 is also described in Non-Patent Document 1.

Patent Document 4 proposes a titanium product for separators that is obtained by performing treatment in such a manner as to immerse a titanium alloy substrate containing a platinum group element in an acid solution containing a non-oxidizing acid, so as to form a layer in which a platinum group element is concentrated, on the surface of the titanium alloy substrate. With this titanium product, a low contact resistance is obtained by virtue of the concentrated platinum group element.

Patent Document 5 proposes a separator material that is obtained by subjecting a surface made of steel, stainless steel, titanium, or the like to surface coating using one of gold, silver, a platinum metal, RuO₂, and IrO₂. By this surface coating, a low contact resistance is obtained.

Whether or not a separator is primarily made of titanium, when a gas diffusion layer and the separator repeatedly come into contact with and separate from each other, the contact resistance between the separator and the gas diffusion layer increases. To solve this problem, the provision of high-density carbon layers on projecting portions of a separator has been devised, as described in Patent Document 6. Patent Document 7 discloses a bipolar plate that is obtained by providing conductive oxide coating to a metallic substrate made of one or two kinds of metals selected from the group consisting of iron, nickel, an alloy of them, and a stainless steel using a platinum group element, so as to obtain a uniformity current density.

Separators need low initial contact resistances. Patent Document 6 points out an increase in contact resistance value of a separator in the case where the separator suffers repeated load fatigue when being in contact with a gas diffusion layer, and describes the necessity to suppress this increase.

Patent Document 8 proposes a titanium product that includes a mixed layer of a noble metal element and a titanium oxide, the noble metal element being precipitated from a titanium alloy substrate, the titanium oxide being generated by performing heat treatment on the titanium alloy substrate in which the noble metal element is precipitated.

### LIST OF PRIOR ART DOCUMENTS

### PATENT DOCUMENT

Patent Document 1: JP4-57735B
Patent Document 2: WO 2007/077645
Patent Document 3: JP2007-59375A
Patent Document 4: JP2006-190643A
Patent Document 5: US2007/0015034A
Patent Document 6: JP2006-134640A
Patent Document 7: WO 2003/026052
Patent Document 8: WO 2007/013508

### NON PATENT DOCUMENT

Non-Patent Document 1: Hideaki MIYUKI et al, "Low alloy titanium SMI-ACE with high crevice corrosion resistance", The Society of Materials Science, Japan, Committee on Corrosion and Protection, Sep. 12, 2001
Non-Patent Document 2: Glassford K. M. et al, "Electron transport properties in RuO2 rutil", Phys. Rev. B: Condens. Matter 49 (1994), p.7107-7114
Non-Patent Document 3: Data published on the website of Horita Laboratory, Japan Advanced Institute of Science and Technology, [searched on Feb. 10, 2015], Internet (http://www.jaist.ac.jp/ms/labs/handoutai/horita-lab/FeRAM/words.htm)

### SUMMARY OF INVENTION

### TECHNICAL PROBLEM

The titanium products proposed in Patent Documents 3 and 4 are treated using acid containing an oxidizing acid from the viewpoint of suppressing the absorption of hydrogen to the titanium product. Thus, a titanium oxide is present in a lower layer of a reprecipitated platinum group element. Therefore, leaving this titanium oxide raises a problem of a high initial contact resistance. In addition, the treatment using the acid containing an oxidizing acid increases the thickness of a passivation film on a surface, and thus operation of a fuel cell for a long time raises a problem of an increase in contact resistance due to an influence of the formation of a corrosion product and the like. In particular, since the heat treatment is performed in the invention disclosed in Patent Document 3, these problems come up further noticeably.

In addition, in the titanium product according to Patent Document 3, the heat treatment not only results in an increase in cost but also may lead to the deformation of the titanium product, and a productivity has been deteriorated in some cases due to a strict atmosphere condition for the heat treatment.

In the separators disclosed in Patent Documents 5 to 7, a low contact resistance is achieved by forming a coating layer on a surface, therefore raising a problem of an increase in contact resistance if the coating layer falls off.

Each of the titanium products disclosed in Patent Documents 3, 4, and 8 achieves a low contact resistance using a platinum group element precipitated on the surface of a titanium material, and needs the addition of the platinum group element to a titanium alloy substrate in a large quantity. For this reason, an increase in cost is inevitable.

An objective of the present invention has been set in view of the problems described above, and is to provide a titanium alloy having a high corrosion resistance and capable of keeping a low contact resistance in comparison with conventional titanium alloys having an equivalent platinum group element content.

Another objective of the present invention is to provide a separator for a fuel cell that is inexpensive and capable of keeping a low contact resistance, and to provide a polymer electrolyte fuel cell.

### SOLUTION TO PROBLEM

The present inventors conducted intensive studies to achieve the objectives described above and consequently discovered a titanium alloy that is obtained by preparing platinum group elements and oxides as raw materials, rather than platinum group elements, mixing the raw materials with a titanium alloy substrate, and melting them. Specifically, these oxides of the platinum group elements are reduced in a melting process by a titanium having a lower free energy of oxide formation, and the surface of the titanium alloy material is brought into the state where compounds (e.g., (Ir, Ru, Ti)O₂₋ₓ and the like, obtained by replacing Ti sites of Ir-Ti-O, Ir-Ru-Ti-O, TiO₂ oxides with platinum metals) made up of titanium, oxygen, and platinum group elements, are exposed, rather than the mixture of the noble metal elements and the titanium oxide. By causing such compounds to be present on the surface of the titanium alloy in a large quantity, the reduction of contact resistance can be achieved. Then, it was found that such compounds can secure a lot of conductive paths with a considerably small quantity of platinum group elements in comparison with precipitating the platinum group elements themselves on the surface. The present invention is thus completed.

The gist of the present invention is as follows.
(A) A titanium alloy containing 0.01 to 0.15% by mass of at least one of platinum group elements in total, and the balance being titanium, oxygen, and impurities, wherein
   the titanium alloy includes particles of a compound that is made up of at least one of the platinum group elements, titanium, and oxygen, and
   an average size of the particles on a surface of the titanium alloy is 1.0 µm or smaller, and a number density of the particles on the surface of the titanium alloy is 25/1000 µm² or more.
(B) The titanium alloy according to above (A), wherein the platinum group element is at least one of ruthenium and iridium.
(C) A titanium separator for a fuel cell, including the titanium alloy according to above (A) or (B).
(D) A polymer electrolyte fuel cell including the separator according to above (C).

### ADVANTAGEOUS EFFECTS OF INVENTION

When used in facilities, equipment, and the like that are used under environments having corrosiveness (in particular, high-concentration chloride environments at low pHs), the titanium alloy according to the present invention can further enhance the performances and reliabilities of these facilities and the like.

The particles of the compounds contained in the titanium alloy according to the present invention have high conductivities. These particles can be caused to penetrate a passivation film on the surface of the titanium alloy, so as to be exposed on the surface. In this case, the contact resistance can be reduced. Together with the titanium alloy according to the present invention having a high corrosion resistance, the separator containing this titanium alloy can keep a low contact resistance, in a fuel cell, in particular, a polymer electrolyte fuel cell.

### BRIEF DESCRIPTION OF DRAWINGS

[Figure 1] Figure 1 is a back scattering electron image of a titanium alloy in Example embodiment of the present invention 7.
[Figure 2] Figure 2 is an anode polarization curve of the titanium alloy in Example embodiment of the present invention 7.
[Figure 3] Figure 3 is a diagram illustrating the configuration of an apparatus for measuring contact resistance.

### DESCRIPTION OF EMBODIMENTS

As described above, the titanium alloy according to the present invention contains 0.01 to 0.15% by mass of at least one of platinum group elements in total, and the balance being titanium, oxygen, and impurities. This titanium alloy includes particles of compounds that are made up of titanium, oxygen, and the at least one of the platinum group elements. The average size of the particles on the surface of the titanium alloy is 1.0 µm or smaller, and the number density of the particles on the surface of the titanium alloy is 25/1000 µm² or more.
Description of the present invention will be made below in detail.

### [Content of Platinum Group Elements]

Here, the term "platinum group elements" refers to ruthenium (Ru), rhodium (Rh), palladium (Pd), osmium (Os), iridium (Ir), and platinum (Pt).

The platinum group elements have electric resistivities lower than that of titanium and are elements that cause neither oxidation nor corrosion in the operation environment of a polymer electrolyte fuel cell and cause no increase in electric resistance. The electric resistivity of metallic titanium is high in comparison with those of the platinum group elements. In addition, in the air or under an environment in a polymer electrolyte fuel cell in operation, a strong passivation film is generated on the surface of metallic titanium. The electric resistance of this passivation film is higher than the electric resistance of the metallic titanium. Meanwhile, the passivation film on the surface serves as a protection mechanism by which titanium manifests an excellent corrosion resistance in various environments, and is necessary to apply titanium to a separator in terms of keeping the corrosion resistance.

In the titanium alloy according to the present invention, the platinum group elements are preferably present in a large quantity as elements that constitute the particles of compounds made up of at least one of the platinum group elements, titanium, and oxygen (hereinafter, referred to as "compound particles"). The compound particles have a high electric conductivity and a high corrosion resistance. Even if most of the surface of the titanium alloy is covered with the passivation film of titanium, when the compound particles are present on the surface, the compound particles can be caused to penetrate the passivation film. These particles have electric connection paths with the substrate (matrix) of this titanium alloy. The compound particles are not added on the substrate of the titanium alloy but contained in the titanium alloy. For this reason, even when the titanium alloy is exposed to a corrosive environment, the compound particles hardly fall off from the titanium alloy.

For the above reason, this titanium alloy has both a low contact resistance and a high corrosion resistance. In addition, even when a separator and a gas diffusion layer repeatedly come into contact with and separate from each other, or even when repeated load fatigue is added between them, an increase in contact resistance between them is small.

The content of the platinum group elements is set at 0.01 to 0.15% by mass (hereinafter, "% by mass" will be simply denoted by "%") of the titanium alloy. A content of the platinum group element less than 0.01% results in an insufficient effect of the compound particles on increasing the corrosion resistance. On the other hand, a content of the platinum group elements more than 0.15% leads to a considerable raw-material cost, resulting in a poor economic efficiency in comparison with the conventional titanium alloys that contain platinum group elements. In addition, an excessive content of the platinum group elements results in a deteriorated workability.

Taking the balance between economic efficiency and corrosion resistance into consideration, the content of the platinum group elements is preferably set at 0.02 to 0.10%. As to the titanium alloy according to the present invention, even when the content of the platinum group elements is within this range, the titanium alloy has a low contact resistance on a par with that of a titanium alloy at a content of platinum group elements more than 0.10%.

In the case where the platinum group elements constituting the compounds are Ir and Ru, the ratio between Ir and Ru is preferably within a range 0.2:0.8 to 0.8:0.2 in atom ratio. This is because Ir is an expensive element, and thus it is preferable to use more of Ru, which is excellent in economic efficiency, whereas it is preferable to contain Ir from the viewpoint of enhancing the corrosion resistance.

### [Content of Oxygen]

Oxygen is an element necessary to form compound particles that are made up of at least one of platinum group elements, titanium, and oxygen. For this reason, the content of oxygen is preferably set at 0.04% or more. Meanwhile, an excessive content of oxygen results in excessively large compound particles, and thus the content of oxygen is preferably set at 0.4% or less.

### [Content of C]

C (carbon) is an impurity contained in the titanium alloy. An excessive content of C makes TiC precipitate, leading to the risk of a deteriorated corrosion resistance. Consequently, the content of C is preferably set at 0.2% or less.

### [Content of Fe]

In general, titanium alloys contain Fe (iron) as an impurity Fe has a function of deteriorating the corrosion resistance. Therefore, to increase the corrosion resistance, the content of Fe is preferably set at 0.1% or less.

### [Number Density of Compound Particles]

To achieve a low contact resistance, the more the compound particles are present per unit surface area of the titanium alloy, the more preferable it is. In addition, when being exposed to a corrosive environment, the compound particles play a role in decreasing the hydrogenation voltage of the titanium alloy to ennoble a rest potential, stabilizing the passivation film on the surface, and repassivating the surface of the titanium alloy even when depassivation phenomenon occurs. To allow this role to exert sufficiently, more of the compound particles need to be present per unit surface area.

The compound particles can be checked by observing a micro structure on the cross section of the titanium alloy according to the present invention. The number density of the particles can be considered to be, for example, calculated from the number of the compound particles present in an area of a square of side 20 µm for each of ten images obtained by capturing the micro structure observed under an optical microscope at random. The measurement of the number density of the compound particles is not limited to that based on the images of the micro structure under the optical microscope, and may be, for example, that based on images obtained under a scanning electron microscope (SEM).

The number of compound particles necessary to obtain a high corrosion resistance (specifically, a corrosion resistance evaluated in terms of the presence/absence of an anode melting peak to be described later and a passivation current density), and a low contact resistance is 25/1000 µm² or more (10/400 µm² or more) and is preferably 50/1000 µm² or more (20/400 µm² or more). On the other hand, an excessive number of the compound particles leads to a reduced ductility of this titanium alloy, resulting in a poor workability Therefore, the number density of the compound particles is preferably 1500/1000 µm² or less.

Assuming that the volume ratio of the compound particles to the titanium alloy is constant, the larger the average grain diameter of the compound particles is (accordingly, the larger the average size of the compound particles on the surface of the titanium alloy is), the smaller the number density of the compound particles is. In this case, the contact resistance tends to increase. For this reason, the average size of the compound particles on the surface of the titanium alloy is set at 1.0 µm or smaller, and the smaller the average size is, the more preferable it is. According to the result of a test conducted by the present inventors, when the average size of the compound particle exceeds 1.0 µm, the contact resistance increases over time even if the number density of the compound particles is 25/1000 µm² or more.

To keep a low contact resistance, the area fraction of the compound particles on the surface of the titanium alloy is preferably 3% or higher, more preferably 5% or higher.

### [Preferable Kinds of Platinum Group Elements]

As described above, since the compound particles mainly take the conductivity on the surface of the titanium alloy, the compounds preferably have low conductivities. When platinum group elements that make up of the compounds are one or both of ruthenium and iridium, the contact resistance of this titanium alloy is low, and thus the compounds containing one or both of ruthenium and iridium as the platinum group elements are considered to have a high electric conductivity. In addition, according to Non-Patent Document 2 described above, the specific resistance value p of RuO₂ is 3.52 × 10⁻⁷ Ω·m, and according to Non-Patent Document 3 described above, the electric conductivity of IrO₂ is 49 µΩ·cm. As seen from above, while being oxides, RuO₂ and IrO₂ both have electric conductivities close to those of metals. Each compound made by adding titanium to each of these oxides is considered to similarly have a high electric conductivity.

Therefore, in the titanium alloy according to the present invention, the platinum group element is preferably at least one of ruthenium and iridium. The compound may be, for example, Ti₁₋ₓRuₓO₂. Because Os is extremely expensive, using Os as the platinum group element is not preferable in terms of economic efficiency.

### [Method for Producing Titanium Alloy according to Present Invention]

The titanium alloy according to the present invention can be produced by, for example, heating metallic titanium and an oxide of a platinum group element at a temperature equal to or higher than the melting temperature of the metallic titanium, and thereafter solidifying them. Therefore, the lower limit of the temperature in the heating needs to be higher than the fusing point of titanium and is preferably 1700°C or higher. The metallic titanium can be melted by, for example, Ar arc melting, vacuum arc remelting, or the like.

The oxide of the platinum group element can be, for example, one or both of RuO₂ and IrO₂, and is preferably in a granular form. In the titanium alloy to be produced, the compound particles correspond to the oxide of the platinum group element as a raw material. Because titanium has a low free energy of oxide formation, an excessively high heating temperature causes the oxide of the platinum group element to be reduced by titanium, and the resultant platinum group element forms an alloy with titanium. In this case, the compound particles cannot be obtained. Consequently, the heating temperature (the temperature of titanium melt) is preferably set at 2500°C or lower.

The oxides of platinum group elements have specific gravities higher than that of the titanium melt and thus settle out in the titanium melt. To disperse the oxides of platinum group elements in the titanium melt uniformly, it is preferable to stir molten metal in the melting of titanium. For example, in vacuum arc remelting, the molten metal can be stirred using a stirrer.

By cooling the titanium melt obtained as described above to solidify the titanium melt, the titanium alloy according to the present invention is obtained.

After the solidification of the titanium melt, the titanium alloy may be annealed. In this case, it is preferable that the temperature of the annealing is set at 750°C or lower, and the time period of the annealing is set at 8 hours or shorter. This is because when the temperature of the annealing is set at higher than 750°C, or the temperature of the annealing is set at longer than 8 hours, of the oxide of the platinum group element as raw material, fine oxides are lost, and coarse oxides grow and further coarsen to be 1 µm or larger.

Regardless of whether or not to perform the annealing, if a small number of the compound particles penetrate a passivation film and are exposed on the surface of the obtained titanium alloy, the compound particles can be exposed by treating the surface of the titanium alloy using a non-oxidizing acid solution (e.g., hydrochloric acid) to remove at least part of the passivation film. Since the compound particles are oxides, a passivation film will not be formed again on the exposed compound particles.

### EXAMPLE

Samples of various kinds of titanium alloys were prepared or acquired on the market, and their corrosion resistances and contact resistances were evaluated to check the effect of the present invention.

### [Method for Preparing Samples]

Table 1 shows methods for preparing the samples, the chemical compositions of the resultant samples, and the number density and the average size of compound particles.

### [Table 1]

**Table 1**

| CLASSIFICATION/ NUMBER | PREPARING METHOD, ETC. OF SAMPLE | MOLTEN METAL TEMPERATURE IN MELTING [°C] | ADDED PLATINUM GROUP ELEMENT | | CHEMICAL COMPOSITION [MASS%] | | | | COMPOUND PARTICLE | | NOTE |
|---|---|---|---|---|---|---|---|---|---|---|---|
| | | | GRANULARITY [µm] | OXIDE CHARGE [MASS%] | PLATINUM GROUP ELEMENT | Fe | O | C | NUMBER DENSITY [/1000 pull | AVERAGE SIZE [µm] | |
| CONVENTIONAL EXAMPLE 1 | COMMERCIAL JIS TYPE 1 TITANIUM | - | - | - | - | 0.03 | 0.06 | - | - | - | |
| CONVENTIONAL EXAMPLE 2 | COMMERCIAL Gr.17 TITANIUM | - | - | - | Pd: 0.06 | 0.02 | 0.03 | 0 | - | - | PATENT DOCUMENT 1 |
| CONVENTIONAL EXAMPLE 3 | SUBJECTING COMMERCIAL Gr.7 TITANIUM TO TREATMENT OF INVENTIVE EXAMPLE 4 | - | - | - | Pd: 0.15 | 0.077 | 0.103 | 0.006 | - | - | PATENT DOCUMENT 3 |
| CONVENTIONAL EXAMPLE 4 | SUBJECTING COMMERCIAL Gr.7 TITANIUM TO TREATMENT OF INVENTIVE EXAMPLE No 4-3 | - | - | - | Pd: 0.15 | 0.077 | 0.103 | 0.006 | - | - | PATENT DOCUMENT 4 |
| CONVENTIONAL EXAMPLE 5 | PERFORMING VAPOR DEPOSITION OF FILM OF Au ON COMMERCIAL JIS TYPE 1 TITANIUM BY PVD | - | - | - | - | 0.03 | 0.06 | - | - | - | PATENT DOCUMENT 5 |
| CONVENTIONAL EXAMPLE 6 | FORMING OXIDE COATING OF PLATINUM GROUP ELEMENT AND TITANIUM ON SURFACE OF COMMERCIAL JIS TYPE I TITANIUM | - | - | - | OXIDES OF Ru, Pt OVER THE ENTIRE SURFACE | 0.03 | 0.06 | - | - | - | PATENT DOCUMENT 7 |
| COMPARATIVE EXAMPLE 1 | ADDING IrO₂ | 2080 | ≤20 | 0.010 | Ir: 85 ppm | 0.03 | 0.05 | 0.003 | 18 | 0.7 | PLATINUM GROUP AMOUNT FELL OUT OF RANGE |
| COMPARATIVE EXAMPLE 2 | ADDING PtO | 2100 | ≤20 | 0.185 | Pt: 0.17 | 0.04 | 0.098 | 0.004 | 1602 | 0.95 | PLATINUM GROUP AMOUNT FELL OUT OF RANGE |
| COMPARATIVE EXAMPLE 3 | ANNEALING EXAMPLE EMBODIMENT OF PRESENT INVENTION 7 AT 750°C FOR 24 HOURS | 2100 | ≤20 | RuO₂:0.035 0.035 | Ru: 298 ppm | 0.02 | 0.099 | 0.002 | 30 | 1.3 | COMPOUND PARTICLE SIZE WAS LARGE |
| | | | | IrO₂: 0.0798 | Ir: 684 ppm | | | | | | |
| EXAMPLE EMBODIMENT OF PRESENT INVENTION 1 | ADDING Rh₂O₃ | 2050 | ≤20 | 0.015 | Rh: 120 ppm | 0.03 | 0.06 | 0.003 | 35 | 0.5 | |
| EXAMPLE EMBODIMENT OF PRESENT INVENTION 2 | ADDING IrO₂ | 2060 | ≤20 | 0.070 | Ir: 600 ppm | 0.04 | 0.07 | 0.003 | 220 | 0.6 | |
| EXAMPLE EMBODIMENT OF PRESENT INVENTION 3 | ADDING PdO | 2040 | ≤20 | 0.049 | Pd: 420 ppm | 0.03 | 0.07 | 0.002 | 120 | 0.7 | |
| EXAMPLE EMBODIMENT OF PRESENT INVENTION 4 | ADDING PtO₂ | 2100 | ≤20 | 0.174 | Pt: 1419 ppm | 0.02 | 0.096 | 0.003 | 1277 | 0.85 | |
| EXAMPLE EMBODIMENT OF PRESENT INVENTION 5 | ADDING RuO₂ | 2250 | ≤20 | 0.095 | Ru: 700 ppm | 0.03 | 0.07 | 0.003 | 253 | 0.6 | |
| EXAMPLE EMBODIMENT OF PRESENT INVENTION 6 | ADDING OsO₂ | 2150 | ≤20 | 0.033 | Os: 280 ppm | 0.01 | 0.06 | 0.002 | 80 | 0.4 | |
| EXAMPLE EMBODIMENT OF PRESENT INVENTION 7 | ADDING RuO₂, IrO_{z} | 2100 | ≤20 | RuO₂:0.035% | Ru: 298 ppm | 0.02 | 0.099 | 0.002 | 238 | 0.5 | TWO KINDS OF PLATINUM GROUP ELEMENTS ADDED |
| | | | | IrO₂: 0.0798% | Ir:684ppm | | | | | | |
| EXAMPLE EMBODIMENT OF PRESENT INVENTION 8 | PREPARED BY MELTING RAW MATERIAL HAVING COMPOSITION EQUIVALENT TO THAT OF EXAMPLE EMBODIMENT OF PRESENT INVENTION 5 AT 2820°C (ELECTRON BEAM REMELTING) | 2820 | ≤20 | 0.095 | Ru: 687 ppm | 0.04 | 0.097 | 0.002 | 26 | 0.12 | MOLTEN METAL TEMPERATURE FELL OUT OF PREFERABLE RANGE |

As raw materials, the followings were used.
Ti: Commercially available industrial titanium sponge (JIS Type 1)
PdO: Palladium oxide powder from Kishida Chemical Co., Ltd. (purity: 99.9%)
OsO₂: Osmium oxide powder from Kishida Chemical Co., Ltd. (purity: 99.9%)
Rh₂O₃: Rhodium oxide powder from Kishida Chemical Co., Ltd. (purity: 99%)
IrO₂: Iridium oxide powder from Wako Pure Chemical Industries, Ltd. (purity: 99.9%)
RuO₂: Ruthenium oxide powder from Furuya Metal Co., Ltd. (purity: 99.9%)
PtO₂: Platinum oxide powder from Kojima Chemicals Co., Ltd. (purity: 98%)

Each powder was used in the form of minus sieve sieved through a sieve having an aperture of 20 µm (powder made of particles 20 µm or smaller).

Samples in Example embodiments of the present invention 1 to 8 and Comparative examples 1 to 3 were prepared by the following method. First, an oxide of a platinum group element and titanium sponge were subjected to Ar arc-button melting and cast while molten metal are stirred using an arc, so that ingots having a thickness of 15 mm were prepared. These ingots were heated to 880°C, subjected to hot rolling to have a reduced thickness down to 4 mm, and thereafter subjected to heat treatment at 750°C for 30 minutes. Then, mill scales formed on the surface of each resultant sample were removed by machining.

Next, these samples were subjected to cold rolling a plurality of times to have a reduced thickness down to 0.15 mm. Until the thickness of the samples was reduced to the final thickness, the samples were subjected to strain relieving annealing in Ar gas at 650°C for 4 hours. Thereafter, the samples were annealed in Ar gas at 650°C for 4 hours and prepared as the samples in Example embodiments of the present invention and Comparative example.

The samples in Comparative example failed to satisfy any one of requirements for the titanium alloy according to the present invention, as will be described later.

Conventional example 1 was a commercially available titanium product of JIS Type 1.

The samples in Conventional examples 2 to 6 were all commercially available titanium products or the titanium products described in Patent Documents prepared under the conditions described in the documents. The sample in Conventional example 2 was commercial Gr.17 titanium and described in Patent Document 1. The sample in Conventional example 3 was a reproduction of the example denoted by reference numeral 4 in Patent Document 3 using commercial Gr.7 titanium. The sample in Conventional example 4 was a reproduction of the example denoted by No. 4-3 in Patent Document 4 using commercial Gr.7 titanium. The sample in Conventional example 5 was obtained by forming a film of Au on commercial JIS Type 1 titanium by vapor deposition in accordance with the condition disclosed in Patent Document 5. The sample in Conventional example 6 was one described in Patent Document 7. This sample was obtained by preparing JIS Type 1 titanium as a substrate, treating this substrate in a 20% hydrochloric acid aqueous solution at 80°C for 10 minutes, and thereafter immersing the substrate in an immersion solution at room temperature for 10 minutes, the immersion solution made by dissolving platinum chloride acid and ruthenium chloride acid in a 20% hydrochloric acid aqueous solution in such a manner that each of the metals was contained at 50 g/L.

All of the samples in Conventional examples did not include particles of compounds made up of at least one of platinum group elements, titanium, and oxygen.

### [Number Density of Compound Particles]

For the samples in Example embodiments of the present invention and Comparative examples, the number densities of compound particles on their surfaces were measured. The method for the measurement is as follows.

Each sample was cut so that a cross section along a rolling longitudinal direction and a cross section in a rolling width direction were obtained, and for each of these cross sections, back scattering electron (BSE) images of a micro structure were captured in five visual fields at a magnification of 2000 times. Then, the number of white precipitates present in the visual field of the image was counted, and the number was divided by the area of the visual field, whereby the number density (number/1000 µm²) was calculated.

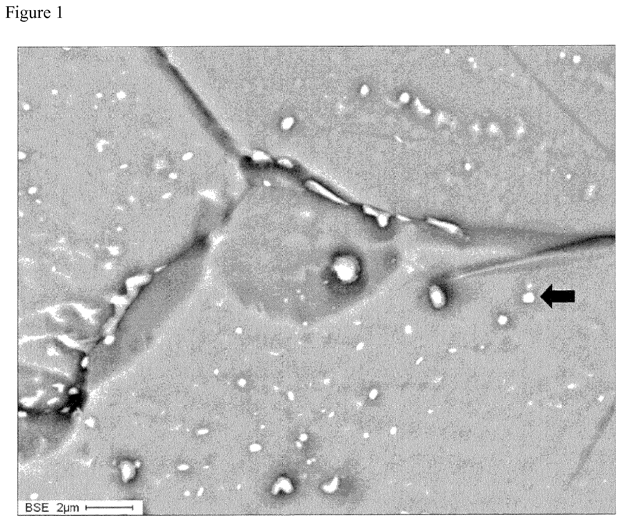

Figure 1 is a back scattering electron image of the titanium alloy in Example embodiment of the present invention 7, illustrating an example of an object of the measurement of the number density of compound particles. In Figure 1, an example of the compound particles is illustrated by an arrow. In a back scattering electron image, a compound particle has a high brightness (whitish) as compared with the substrate.

### [Size of Compound Particle]

For the samples in Example embodiments of the present invention and Comparative examples, the size of compound particles was measured. The method for the measurement is as follows.

The back scattering electron image described above that was used for the measurement of the number density of compound particles was subjected to binarize processing. Then, assuming that the compound particles were in spherical shapes and maximum-diameter portions of the compound particles appear on the image, the average grain diameter of the compound particles was calculated and determined as the size of the compound particles. The size of the compound particles was calculated for ten images used for the measurement of the number density, using image analysis software, WinROOF Ver. 7.4, from Mitani Corporation.

### [Content of Platinum Group Elements]

Each sample was dissolved in an acid solution, the resultant residue was also dissolved in a solution of a different kind, and the content of platinum group elements in each sample was measured by inductivity coupled plasma (ICP) emission spectral analysis.

### [Investigation of Corrosion Resistance]

Each sample was subjected to anode polarization test, namely the measurement of current density with varied potential under a solution environment where pure titanium suffers crevice corrosion, the presence/absence of an anode melting peak was checked, and a passivation current density was compared with that of pure titanium (Conventional example 1), whereby a determination was made as to whether a corrosion resistance was good or poor.

Measurement apparatus: HZ-3000, an electrochemical measurement system from Hokuto Denko Corp.

Corrosion test environment:
Solution: 250g/L-NaCl; adjusted to pH = 0.5 using hydrochloric acid
Temperature: 80°C
Deaerated gas: Ar
Rest potential: Measured after leaving each sample stand in the solution described above in nonenergized state for 24 hours
Sweep speed: 20 mV/min; swept until a potential with respect to a saturated calomel electrode (SCE) becomes 1.0 V

For the sample in Conventional examples 5 and 6, leaving the sample until the measurement of rest potential serves as an endurance test on vapor deposition material and coating material formed on the surfaces of the samples.

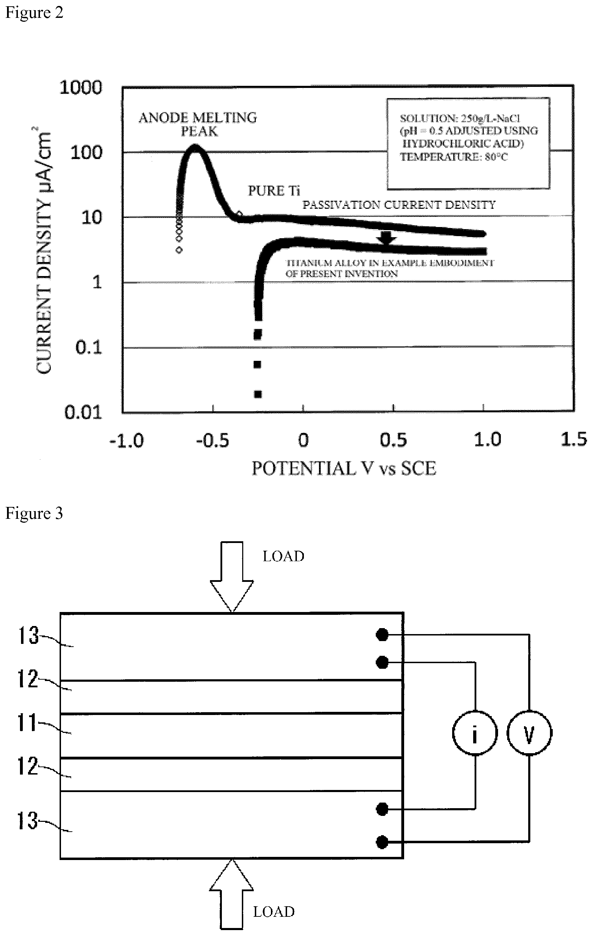

Figure 2 illustrates an anode polarization curve of the titanium alloy in Example embodiment of the present invention 7. In this sample, no anode melting peak was recognized, and a passivation current density was low in comparison with pure titanium. When a sample has such a feature, the corrosion resistance of the sample was determined to be good. All the samples in Example embodiments of the present invention showed similar tendencies.

### [Measurement of Contact Resistance]

Figure 3 is a diagram illustrating the configuration of an apparatus for measuring contact resistance. The measurement of contact resistance was conducted on each sample using this apparatus. Specifically, each sample was first immersed in a 0.2% HF aqueous solution for 3 minutes to perform pickling to remove a surface passivation film generated in rolling, and thereafter subjected to rinsing and drying.

Referring to Figure 3, specifically, a metal plate 11, which was a sample to be measured, was sandwiched between a pair of sheets of carbon paper (TGP-H-90 from Toray Industries, Inc.) 12 used in gas diffusion layers of a polymer electrolyte fuel cell, which is sandwiched between a pair of gold-plated electrodes 13. Each carbon paper had an area of 1 cm². Next, a process in which a constant current was caused to flow through the pair of gold-plated electrodes 13, a pressure of 10 kgf/cm² (9.81 × 10⁵ Pa) was applied for 10 seconds, and immediately thereafter the pressure was unloaded, was repeated 20 times, and thereafter a voltage drop occurring between the sheets of carbon paper 12 and the metal plate 11 was measured, and based on the result of the measurement, a resistance value was determined. The resultant resistance value is a value being the sum of the contact resistances of both surfaces of the metal plate 11, and thus the value was divided by two, which was regarded as a first-time contact resistance value per single surface of the metal plate 11.

Furthermore, as described in the paragraph [0030] of Patent Document 6, stress loading of 10 kgf/cm² and 20 kgf/cm² (19.6 × 10⁵ Pa) was repeated five times, and a contact resistance at a load stress of 10 kgf/cm² was measured.

A determination is made as to whether a metal plate was good or poor, in such a manner that the metal plate was accepted when the value of the contact resistance of the metal plate was 10 mΩ·cm² or lower at both of the first measurement and the fifth measurement. Hereinafter, unless a reference for comparison is presented in particular, the term "low" used for a measured value of contact resistance means that measured value was 10 mΩ·cm² or lower, and the term "high" means that the measured value exceeded 10 mΩ·cm².

### [Result of Evaluation]

Table 2 shows the results of evaluation on the corrosion resistances and the contact resistances of the respective samples.

### [Table 2]

**Table 2**

| CLASSIFICATION/ NUMBER | COMPOUND PARTICLE | | CORROSION RESISTANCE | | CONTACT RESISTANCE [mΩ·cm² (10 kgf/cm²)] | | NOTE |
|---|---|---|---|---|---|---|---|
| | NUMBER DENSITY[/1000 µm²] | AVERAGE SIZE [µm] | ANODE MELTING PEAK | PASSIVATION CURRENT DENSITY | 1ST TIME | 5TH TIME | |
| CONVENTIONAL EXAMPLE 1 | - | - | PRESENT | REFERENCE | 15.1 | 29.2 | |
| CONVENTIONAL EXAMPLE 2 | - | - | ABSENT | EQUAL TO OR LOWER THAN REFERENCE | 6.1 | 12.4 | PATENT DOCUMENT 1 |
| CONVENTIONAL EXAMPLE 3 | - | - | ABSENT | EQUAL TO OR LOWER THAN REFERENCE | 8.3 | 10.3 | PATENT DOCUMENT 3 |
| CONVENTIONAL EXAMPLE 4 | - | - | ABSENT | EQUAL TO OR LOWER THAN REFERENCE | 8.6 | 11.9 | PATENT DOCUMENT 4 |
| CONVENTIONAL EXAMPLE 5 | - | - | PRESENT (CURRENT DENSITY LOWER THAN IN CONVENTIONAL EXAMPLE 1) | EQUAL TO OR LOWER THAN REFERENCE | 4.7 | 11.1 | PATENT DOCUMENT 5 |
| CONVENTIONAL EXAMPLE 6 | | | ABSENT | EQUAL TO OR LOWER THAN REFERENCE | 9.8 | 10.7 | PATENT DOCUMENT 7 |
| COMPARATIVE EXAMPLE 1 | 18 | 0.7 | PRESENT (CURRENT DENSITY LOWER THAN IN CONVENTIONAL EXAMPLE 1) | EQUAL TO OR LOWER THAN REFERENCE | 6.8 | 10.2 | CONTENT OF PLATINUM GROUP ELEMENTS FELL OUT OF RANGE |
| COMPARATIVE EXAMPLE 2 | 1602 | 0.95 | ABSENT | EQUAL TO OR LOWER THAN REFERENCE | 4.8 | 5.1 | CONTENT OF PLATINUM GROUP ELEMENTS FELL OUT OF RANGE LOW DUCTILITY AND POOR WORKABILITY |
| COMPARATIVE EXAMPLE 3 | 30 | 1.3 | ABSENT | EQUAL TO OR LOWER THAN REFERENCE | 6.1 | 10.2 | COMPOUND SIZE WAS LARGE |
| EXAMPLE EMBODIMENT OF PRESENT INVENTION 1 | 35 | 0.5 | ABSENT | EQUAL TO OR LOWER THAN REFERENCE | 5.1 | 6.3 | |
| EXAMPLE EMBODIMENT OF PRESENT INVENTION 2 | 220 | 0.6 | ABSENT | EQUAL TO OR LOWER THAN REFERENCE | 6.3 | 7.1 | |
| EXAMPLE EMBODIMENT OF PRESENT INVENTION 3 | 120 | 0.7 | ABSENT | EQUAL TO OR LOWER THAN REFERENCE | 4.7 | 5.1 | |
| EXAMPLE EMBODIMENT OF PRESENT INVENTION 4 | 1277 | 0.85 | ABSENT | EQUAL TO OR LOWER THAN REFERENCE | 2.9 | 3.3 | |
| EXAMPLE EMBODIMENT OF PRESENT INVENTION 5 | 253 | 0.6 | ABSENT | EQUAL TO OR LOWER THAN REFERENCE | 3.3 | 3.5 | |
| EXAMPLE EMBODIMENT OF PRESENT INVENTION 6 | 80 | 0.4 | ABSENT | EQUAL TO OR LOWER THAN REFERENCE | 4.6 | 5.8 | |
| EXAMPLE EMBODIMENT OF PRESENT INVENTION 7 | 238 | 0.5 | ABSENT | EQUAL TO OR LOWER THAN REFERENCE | 4 | 5.1 | MULTIPLE PLATINUM GROUP ELEMENTS ADDED |
| EXAMPLE EMBODIMENT OF PRESENT INVENTION 8 | 26 | 0.12 | ABSENT | EQUAL TO OR LOWER THAN REFERENCE | 7.3 | 9.9 | HIGH MELTING TEMPERATURE |

### <Conventional Examples>

### Conventional example 1 (pure titanium)

Corrosion resistance: a peak of an anode melting current was observed. In other words, the corrosion resistance was low.

Contact resistance: A high value was already shown at the first measurement, and a still higher value was shown at the fifth measurement.

### Conventional examples 2 to 4 and 6

Corrosion resistance: High corrosion resistances were shown in comparison with Conventional examples.

Contact resistance: While low values were shown at the first measurement, high values were shown at the fifth measurement.

### Conventional example 5

Corrosion resistance: a peak of an anode melting current was observed. After the measurement of rest potential, Au subjected to the vapor deposition fell off in the solution and present as a floating matter. The adhesiveness of the film by vapor deposition to the substrate is inferred not to have a practical durability.

Contact resistance: While a low value was shown at the first measurement, a high value was shown at the fifth measurement.

### <Comparative Examples>

### Comparative example 1

Corrosion resistance: a peak of an anode melting was observed.

Contact resistance: While a low value was shown at the first measurement, a high value was shown at the fifth measurement.

It is considered that the above results relate to the fact that the content of platinum group elements and the number density of the compound particles are less than the range defined in the present invention.

### Comparative example 2

Both of the corrosion resistance and the contact resistance were good, but the ductility was poor, and the workability was deteriorated. Table 1 shows elongation value in %, which is the evaluation of the ductility of a material. While the elongation of Comparative example 2 was merely 25% or less, the present invention has an elongation of 25% or more. This is considered to relate to the fact that, in the sample in Comparative example 2, the content of the platinum group elements is more than the range defined in the present invention, and the number density of the compound particle was high. The sample in Comparative example 2 is unsuitable for products produced through a working process, such as a separator for polymer electrolyte fuel cells.

### Comparative example 3

Corrosion resistance: Higher than that of pure titanium.

Contact resistance: While low values were shown at the first measurement, high values were shown at the fifth measurement. This is considered to relate to the fact that, in the sample in Comparative example 3, the size of the compound particles was larger than the range defined in the present invention.

As for the sample in Comparative example 3, the reason that the size of compound particles is large in comparison with the samples in Example embodiments of the present invention 1 to 8 is considered to be attributable to a longer annealing time period in the preparation of the sample in Comparative example 3 in comparison with the preparation of the samples in Example embodiments of the present invention 1 to 8.

### <Example Embodiments of Present Invention>

The samples in Example embodiments of the present invention 1 to 8 all had corrosion resistances that were higher than that of pure titanium and contact resistance values that were low at both of the first measurement and the fifth measurement. However, the sample in Example embodiment of the present invention 8 showed a value of contact resistance close to 10 mΩ·cm² at both of the first measurement and the fifth measurement. This is considered to relate to the fact that, in the sample in Example embodiment of the present invention 8, the number density of compound particles was low in comparison with the samples in Example embodiments of the present invention 1 to 7.

In the preparation of the sample in Example embodiment of the present invention 8, the platinum group element was added in the form of an oxide, and it is inferred that part of this oxide was reduced into the platinum group element by titanium due to a molten metal temperature exceeding 2500°C, and most of the platinum group element was dissolved in titanium or formed a compound made up of titanium and the platinum group (i.e., substantially containing no oxygen). In conjunction with this, it is considered that, in the resultant titanium alloy, the number density of compound particles, namely the number density of electric contacts that penetrated the passivation film on the surface to be exposed on the surface became small in comparison with the samples in Example embodiments of the present invention 1 to 7, and the contact resistance increased.

From the above examples, it is clarified that the titanium alloy according to the present invention has a corrosion resistance and a low contact resistance (initial and after the repeated stress loading), and further has a high workability.

### INDUSTRIAL APPLICABILITY

When used in facilities, equipment, and the like that are used under environments having corrosiveness (in particular, high-concentration chloride environments at low pHs), the titanium alloy according to the present invention can maintain the performances of the facilities, equipment, and the like, and enhance the reliabilities of the facilities, equipment, and the like. Since the compound particles present in the metal micro-structure of this titanium alloy have a good conductivity, when a form in which these compound particles penetrate the passivation film on the surface of the titanium alloy to be exposed on the surface is achieved, a low contact resistance can be achieved. In this case, the titanium alloy according to the present invention can be suitably used as a starting material for a separator of a polymer electrolyte fuel cell.

### REFERENCE SIGNS LIST

11: metal plate
12: carbon paper
13: gold-plated electrode

## Claims

1. A titanium alloy containing 0.01 to 0.15% by mass of at least one of platinum group elements in total, and the balance being titanium, oxygen, and impurities, wherein
the titanium alloy includes particles of a compound that is made up of at least one of the platinum group elements, titanium, and oxygen, and
an average size of the particles on a surface of the titanium alloy is 1.0 µm or smaller, and a number density of the particles on the surface of the titanium alloy is 25/1000 µm² or more.

2. The titanium alloy according to claim 1, wherein the platinum group element is at least one of ruthenium and iridium.

3. A separator for a fuel cell, comprising the titanium alloy according to claim 1 or 2.

4. A polymer electrolyte fuel cell comprising the separator according to claim 3.
